# EUROPEAN PATENT SPECIFICATION

(11) **EP 2 037 081 B1**
(45) Date of publication and mention of the grant of the patent: **07.12.2016**
(21) Application number: 07849990.2
(22) Date of filing: 27.11.2007
(51) Int. Cl.: F01D 25/12, F01D 5/18

(54) **PLATFORM COOLING STRUCTURE OF GAS TURBINE ROTOR BLADE**
PLATTFORMKÜHLSTRUKTUR FÜR EINE GASTURBINENSCHAUFEL
STRUCTURE DE REFROIDISSEMENT DE PLATE-FORME D'AUBE DE ROTOR DE TURBINE À GAZ

(30) Priority: 21.02.2007 JP 2007041489
(43) Date of publication of application: 18.03.2009
(73) Proprietor: Mitsubishi Hitachi Power Systems, Ltd., Yokohama 220-8401 (JP)
(72) Inventor: TORII, Shunsuke, Takasago-shi Hyogo 676-8686 (JP); KUWABARA, Masamitsu, Takasago-shi Hyogo 676-8686 (JP); ITO, Eisaku, Takasago-shi Hyogo 676-8686 (JP)
(74) Representative: Henkel, Breuer & Partner
(86) International application number: PCT/JP2007/073287
(87) International publication number: WO 2008/102497

(56) References cited:
- EP-A2- 1 205 634
- EP-A2- 1 688 587
- WO-A1-94/12765
- WO-A1-94/12765
- GB-A- 742 288
- GB-A- 742 288
- US-A1- 2007 020 100

## Description

### Technical Field

The present invention relates to a platform cooling structure for a gas turbine moving blade.

### Background Art

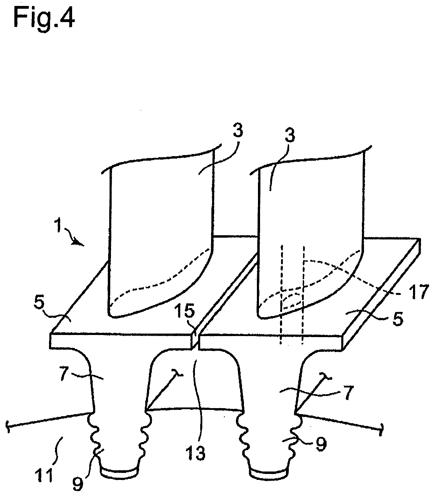

An outline structure of a gas turbine moving blade is shown in Fig. 4. In this drawing, the gas turbine moving blade 1 includes a blade part 3 forming a blade, a platform 5 connected to a bottom of the blade part 3, and a shank part 7 located below the platform 5, where a blade root part 9 is formed below the shank part 7.

Then, in Fig. 4, a continuous groove having a wave shape is formed in both side walls of the blade root part 9. A continuous groove having the same shape is formed in a rotor disk 11. By allowing the groove of the blade root part 9 to engage with the groove of the rotor disk 11, the gas turbine moving blade 1 is fixed to the rotor disk 11. Then, in the same fixing manner, a plurality of gas turbine moving blades 1 is adjacently fixed to the rotor disk 11 in a circumferential direction.

Additionally, a cavity 13 is formed by a lower surface of the platform 5 and a side surface of the shank part 7 of the gas turbine moving blade 1, and sealing air is supplied from the rotor to the cavity 13, thereby preventing high-temperature combustion gas from leaking from a gap 15 between the adjacent platforms 5 and 5 by the use of the sealing air.

In the structure of the gas turbine moving blade 1 having the above-described configuration, since the blade part 3 is exposed to the high-temperature combustion gas, at least one moving blade cooling passageway 17 is provided in the inside of the blade part 3 in order to cool the blade part 3, and the moving blade cooling passageways 17 introduces cooling air from the blade root part 9. Although it is not shown in the drawing, a part or a whole part of the passageway communicates with each other so as to form a serpentine cooling passageway and to cool the whole part of the blade part 3.

Additionally, a part of the cooling air introduced into the moving blade cooling passageways 17 is discharged from the trailing edge of the blade part 3 so as to further cool the trailing edge of the blade part 3.

Since the cooling air supplied to the moving blade cooling passageways 17 is used to cool the blade part 3, the cooling air is controlled at a high-pressure different from the sealing air, and is cooled before supplying if necessary.

Additionally, since the surface of the platform 5 is exposed to high-temperature combustion gas, in order to prevent a thermal damage and a crack caused by thermal stress, there are proposed various structures for cooling the platform 5.

For example, a platform 010 of a gas turbine moving blade disclosed in Patent Document 1 (Japanese Patent Application Laid-Open No. H10-238302) is shown in Fig. 5. Fig. 5(a) is a longitudinal sectional view showing the gas turbine moving blade and Fig. 5(b) is a sectional view taken along the line E-E shown in Fig. 5(a). Patent Document 1 discloses a technique for cooling an upper surface of the platform 010 by the use of sealing air 012 flowing to a lower surface of the platform 010. A plurality of sealing air passageway holes 015 is perforated in the inside of the platform 010 on a concave side 013 so as to be formed through the platform 010 in a radial direction relatively from a center of a turbine shaft.

Additionally, a convection cooling hole 017 relatively extends in an oblique manner from the center of the turbine shaft in a radial direction so as to be opened at the upper surface of the platform 010. The opening formed in the upper surface of the platform 010 is provided with a shaped film discharge hole of which an end is widened so as to cool the upper surface of the platform 010 by the cooling air flowing and extending on the upper surface of the platform 010 crawlingly.

Then, a structure for improving a cooling performance of a gas turbine moving blade disclosed in Patent Document 2 (Japanese Patent Application Laid-Open No. H11-247609 is shown in Fig. 6. Fig. 6(a) is a top view showing the gas turbine moving blade and Fig. 6(b) is a sectional view taken along the line F-F shown in Fig. 6(a). Patent Document 2 discloses a cooling passageway 026 which is formed through the inside of a platform 020 so that one ends communicate with a cooling passageway 024 for cooling the inside of the moving blade 022 and the other ends are opened at both end surfaces of the platform 020.

Further, as shown in Fig. 7, Patent Document 3 (Japanese Patent Application Laid-Open No. 2006-329183) discloses a structure for cooling a portion in the vicinity of a front end of a platform 052 in such a manner that a cover plate 050 is attached between a lower surface of a platform 052 and a shank 054 so as to form a space 056 by the cover plate 050, high-pressure cooling air is guided from a cooling passageway 058 for cooling the inside of a moving blade to the space 056 via a passageway 059, and then the high-pressure cooling air is supplied to the surface of the platform 052 via the space 056 and cooling holes 061 and 063.

As described above, various techniques for cooling the platform of the gas turbine moving blade have been proposed. Patent Document 1 discloses the structure for cooling the platform 010 by the use of the sealing air 012. However, since the sealing air is supplied from the lower surface of the platform in order to prevent the high-temperature combustion gas from leaking from a gap between the adjacent platforms to the rotor, in general, a temperature of the sealing air is not controlled and moreover, a pressure of the sealing air is not controlled at high pressure. As a result, it is not possible to obtain the sufficient cooling performance just by cooling the platform by the use of the sealing air.

Particularly, since a portion in the vicinity of the side edge of the platform away from the bottom of the blade is away from the moving blade cooling passageway 019 for cooling the inside of the blade, it is difficult to cool the portion. Due to such a thermal condition, a cooling structure is required which is capable of effectively cooling the portion in the vicinity of the side edge of the platform away from the bottom of the blade, that is, the surface exposed to the high-temperature combustion gas.

Meanwhile, Patent Documents 2 and 3 disclose the structure for cooling the platform by the use of the high-pressure cooling air flowing to the moving blade cooling passageway instead of the sealing air.

However, in Patent Document 2, the cooling air is discharged from the cooling passageway 026, which is formed through the inside of the platform 020 so that one ends communicate with the cooling passageway 024 for cooling the inside of the moving blade 022 and the other ends are opened at both end surfaces of the platform 020, to the end surfaces of the platform 020, that is, the gap between the adjacent platforms. For this reason, it is possible to cool and seal the end surface of the platform 020, but a problem arises in that it is not possible to effectively cool the upper surface of the platform in the vicinity of the side end portion exposed to the high-temperature combustion gas.

Then, in Patent Document 3, the cooling air flowing to the moving blade cooling passageway is guided from the side end portion of the platform to the upper surface of the platform. However, since the space is formed by attaching the cover plate between the shank and the lower surface of the platform, and the cooling air is discharged to the surface in the vicinity of the front end portion via the space, it is necessary to fix the cover plate to the platform and the shank by welding or the like. As a result, a problem arises in that the processes of assembling increas. Also, since the moving blade rotating at a high speed needs to have higher reliability than that of a stationary member, it is necessary to remove an additional member such as the cover plate as much as possible in general.

EP 1205634 A2 discloses a platform cooling structure for a gas turbine moving blade where film cooling holes opening at an upper surface of the platform extend from a platform cavity formed inside the platform. The cavity is supplied with the cooling air through supply passages extending horizontally from an internal cooling circuit of the blade.

US 2007/020100 A1 discloses a platform cooling structure for a gas turbine moving blade where a recess or pocket is provided that extends over a considerable part of the width of a platform overhang. An outlet opening connecting the recess with a discharge opening at the upper surface of the platform is provided at the outermost end of the recess or pocket.

EP 1688587 A2 discloses a platform cooling structure for a gas turbine moving blade where a cooling circuit inside a shank part and a blade part of the moving blade is curved. Furthermore, film cooling holes are not opening in the vicinity of the side edge of the platform but rather at the transition portion between the blade part and the platform. The cooling passages directed further towards the side edges do not open in the cooling circuit but simply connect the upper and lower sides of the platform projection.

WO 94/12765 A1 discloses a platform cooling structure for a gas turbine moving blade that is similar to the structure of EP 1688587 A2 except that the curvature of the cooling passages through the interior of the blades is smaller.

### Disclosure of the Invention

Therefore, the present invention is contrived in consideration of the above-described background, and an object of the invention is to provide a platform cooling structure for a gas turbine moving blade is provided which is capable of improving cooling performance of a platform and of improving reliability of a moving blade in such a manner that a portion in the vicinity of a side edge of the platform which is away from moving blade cooling passageways and is easily influenced by thermal stress caused by high-temperature combustion gas, that is, an upper surface of the side edge is effectively cooled by guiding high-pressure cooling air, flowing to the moving blade cooling passageways, to a discharge opening formed in a surface of the platform in the vicinity of the side edge of the platform without particularly attaching an additional member such as a cover plate to the platform.

In order to achieve the above-described object, according to the invention, there is provided a platform cooling structure for a gas turbine moving blade including the features of claim 1.

According to the invention, since each of the cooling communication holes of which one end communicates with the moving blade cooling passageways and another end communicates with one of the plurality of discharge openings formed in the surface of the platform in the vicinity of the side edge of the platform is formed through from the moving blade cooling passageways to the inside of the platform or formed through the inside of the shank part and the platform, it is possible to guide high-pressure cooling air, flowing to the moving blade cooling passageways, to the surface in the vicinity of the side edge of the platform without particularly attaching an additional member to the platform.

As a result, since a portion in the vicinity of the side edge of the platform which is easily influenced by thermal stress caused by the high-temperature combustion gas, that is, the upper surface of the side edge is cooled effectively, it is possible to improve cooling performance of the platform. Also, since the additional member such as a cover plate is not attached to the moving blade rotating at a high speed, it is possible to improve reliability of the moving blade.

According to the invention, since the shank part is swollen toward the side edge of the platform, it is possible to form the cooling communication hole formed through the inside of the platform and the shank part from the swollen part.

As a result, since it is possible to form the cooling communication hole up to a portion of the platform away from the moving blade cooling passageways without particularly attaching an additional member such as a cover plate to the platform, it is possible to guide the high-pressure cooling air, flowing to the moving blade cooling passageways, to the upper surface of the side edge and to improve the reliability of the moving blade. manner.

Further, in the platform cooling structure for the gas turbine moving blade with the above-described configuration, a plurality of rows of the discharge openings may be formed in an upper surface in the vicinity of the side edge of the platform so as to be disposed along the side edge. According to the invention, since the discharge opening is broadly provided in the upper surface in the vicinity of the side edge of the platform, the surface in the vicinity of the front end of the platform is effectively cooled by the high-pressure cooling air flowing to the moving blade cooling passageways, thereby obtaining the higher cooling performance and cooling the broader area.

As described above, according to the invention, it is possible to obtain the platform cooling structure for the gas turbine moving blade capable of improving the cooling performance of the platform and of improving the reliability of the moving blade in such a manner that a portion in the vicinity of the side edge of the platform which is away from the moving blade cooling passageways and is easily influenced by the thermal stress caused by the high-temperature combustion gas, that is, the upper surface of the side edge is effectively cooled by guiding the high-pressure cooling air, flowing to the moving blade cooling passageways, to the discharge opening formed in a surface of the platform in the vicinity of the side edge of the platform without particularly attaching the additional member such as the cover plate described in Patent Document 3 to the platform.

### Brief Description of the Drawings

Fig. 1 shows a platform cooling structure for a gas turbine moving blade according to a first example serving to explain certain features of the invention, where Fig. 1(a) is a top view showing a platform of the gas turbine moving blade and Fig. 1(b) is a sectional view taken along the line A-A shown in Fig. 1(a).
Fig. 2 shows an embodiment, where Fig. 2(a) is a top view showing the platform of the gas turbine moving blade and Fig. 2(b) is a sectional view taken along the line B-B shown in Fig. 2(a).
Fig. 3 shows a second example serving to explain certain features, where Fig. 3(a) is a top view showing the platform of the gas turbine moving blade, Fig. 3(b) is a sectional view taken along the line C-C shown in Fig. 3(a), and Fig. 3(c) is a sectional view taken along the line D-D shown in Fig. 3(b).
Fig. 4 is a perspective view showing an outline structure of the gas turbine moving blade.

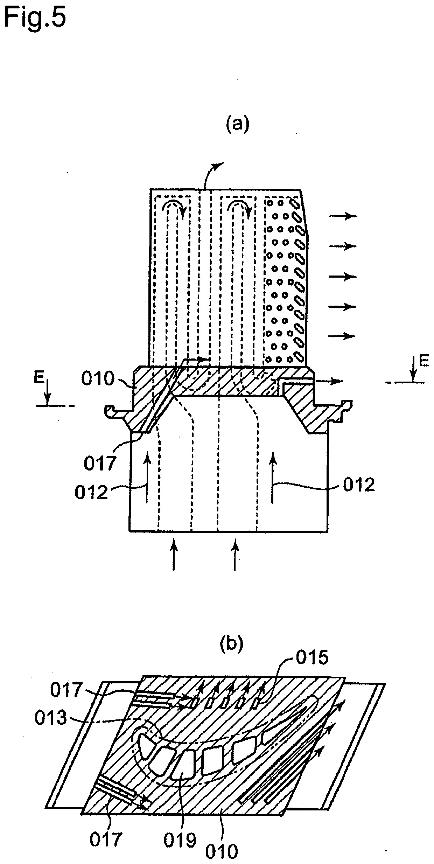

Fig. 5 is an explanatory view showing a conventional art.

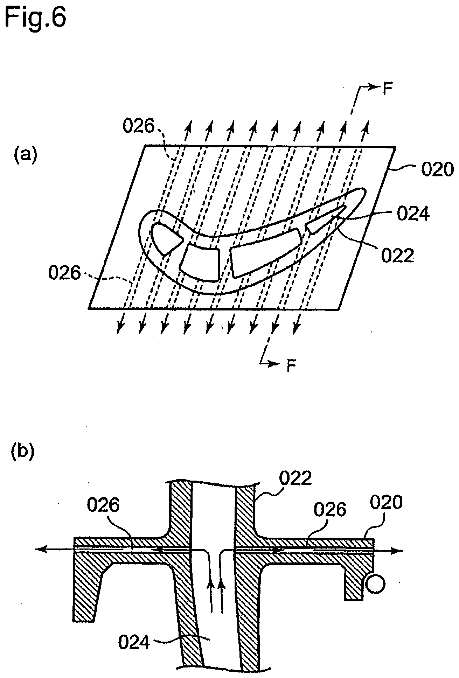

Fig. 6 is an explanatory view showing a conventional art.

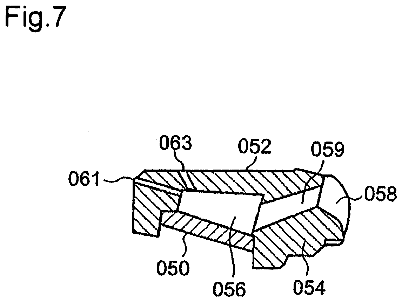

Fig. 7 is an explanatory view showing a conventional art.

### Best Mode for Carrying Out the Invention

Hereinafter, exemplary examples and embodiments of the invention will be described in detail with reference to the accompanying drawings. Here, although the dimension, the material, the shape, the relative arrangement, and the like of the component are described in the examples and embodiment, the scope of the invention is not limited thereto so long as a particular description is not made, but those are only examples for a description.

The embodiments of the invention will be described in detail with reference to the appropriate drawings.

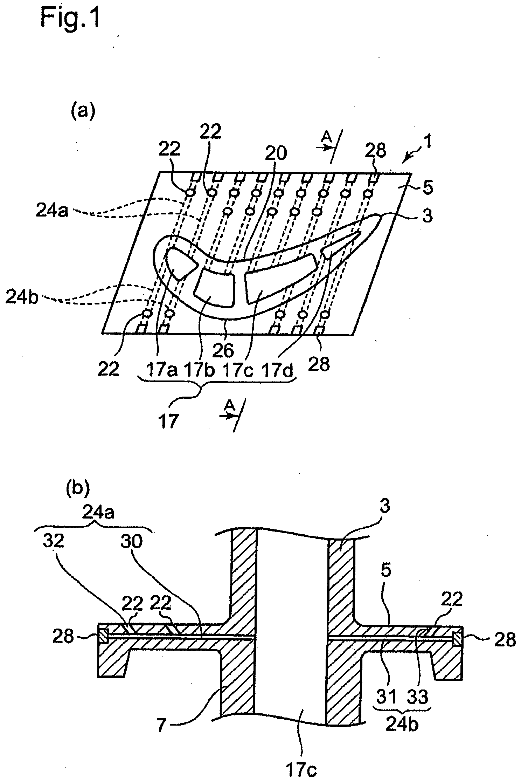

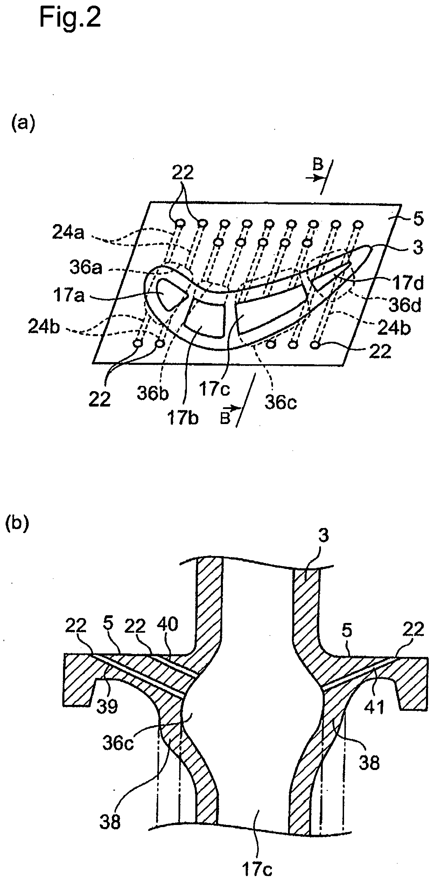

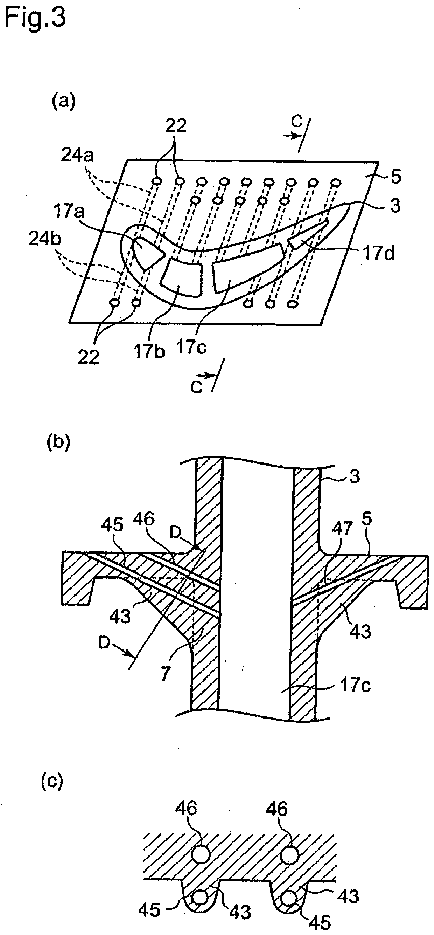

In the referred drawings, Fig. 1 shows a platform cooling structure for a gas turbine moving blade according to a first example serving to explain certain features of the invention, where Fig. 1(a) is a top view showing a platform of the gas turbine moving blade and Fig. 1(b) is a sectional view taken along the line A-A shown in Fig. 1(a). Fig. 2 shows an embodiment, where Fig. 2(a) is a top view showing the platform of the gas turbine moving blade and Fig. 2(b) is a sectional view taken along the line B-B shown in Fig. 2(a). Fig. 3 shows a second example serving to explain certain features, where Fig. 3(a) is a top view showing the platform of the gas turbine moving blade, Fig. 3(b) is a sectional view taken along the line C-C shown in Fig. 3(a), and Fig. 3(c) is a sectional view taken along the line D-D shown in Fig. 3(b).

Fig. 4 shows an outline structure of a gas turbine moving blade 1. In this drawing, the gas turbine moving blade 1 includes a blade part 3 forming a blade, a platform 5 connected to a bottom of the blade part 3, and a shank part 7 located below the platform 5, where a blade root part 9 is formed below the shank part 7.

Then, in Fig. 4, a continuous groove having a wave shape is formed in both side walls of the blade root part 9. A continuous groove having the same shape is formed in a rotor disk 11. By allowing the groove of the blade root part 9 to engage with the groove of the rotor disk 11, the gas turbine moving blade 1 is fixed to the rotor disk 11. Then, in the same fixing manner, a plurality of gas turbine moving blades 1 is adjacently fixed to the rotor disk 11 in a circumferential direction.

Additionally, a cavity 13 is formed by a lower surface of the platform 5 and a side surface of the shank part 7 of the gas turbine moving blade 1, and sealing air is supplied from the rotor to the cavity 13, thereby preventing high-temperature combustion gas from leaking from a gap 15 formed between the adjacent platforms 5 and 5 by the use of the sealing air.

In the structure of the gas turbine moving blade 1 having the above-described configuration, since the blade part 3 is exposed to the high-temperature combustion gas, at least one moving blade cooling passageway 17 is provided in order to cool the blade part 3, and the moving blade cooling passageways 17 introduce cooling air from the blade root part 9. Although it is not shown in the drawing, a part or a whole part of the passageway communicates with each other in the blade so as to form a serpentine cooling passageway and to cool the whole part of the blade part 3.

Additionally, a part of the cooling air introduced into the moving blade cooling passageways 17 is discharged from the trailing edge of the blade part 3 so as to further cool the trailing edge of the blade part 3.

Since the cooling air supplied to the moving blade cooling passageways 17 is used to cool the blade part 3, the cooling air is controlled at a high-pressure different from the sealing air, and is cooled before supplying if necessary.

The structure of the gas turbine moving blade is the same as that of the background art. Next, a structure for cooling the platform 5 according to the invention will be described with preference to Figs. 1 to 3.

### (First Example)

As shown in Fig. 1, the platform 5 is formed in a substantially rectangular shape in a top view. The blade part 3 is integrally formed with the platform 5 by casting. In the inside of the blade part 3, the moving blade cooling passageways 17 are provided as a leading edge portion 17a, center portions 17b, 17c, and a trailing edge portion 17d. Then, cooling air is introduced from the blade root part 9 into the passageways. Although it is not shown in the drawing, a part or a whole part of the passageways communicate with one another in the inside of the blade so as to form a serpentine cooling passageway and to cool the whole part of the blade part 3.

In a surface of the platform 5 in the vicinity of the side edge on a concave side 20 of the platform 5, a plurality of cooling air discharge openings 22 is provided along the side edge, and a cooling communication hole 24a is provided of which one end communicates with the moving blade cooling passageways 17a, 17b, 17c, or 17d and the other end communicates with the cooling air discharge opening 22. As shown in Fig. 1, a plurality of cooling communication holes 24a on the concave side 20 of the blade part 3 is arranged so as to be substantially parallel to the leading edge of the platform 5. On a convex side 26, two cooling communication holes 24b are provided on the leading edge of the blade part 3 and three cooling communication holes 24b are provided on the trailing edge thereof so as to be substantially parallel to the leading edge of the platform 5, respectively. Additionally, the cooling communication holes 24a and 24b may be arranged at an appropriate angle therebetween so as to optimize the cooling state of the platform.

Then, as shown in Fig. 1(b), in the inside of the platform 5, each cooling communication hole 24a on the concave side 20 is formed in a linear shape so that one end communicates with the moving blade cooling passageway 17c and the other end communicates with the side end surface of the platform 5. A platform passageway 30 is formed in such a manner that the opening of the side end surface is closed by a plug 28, and a discharging passageway 32 is formed so as to be inclined from the platform passageway 30 toward the discharge opening 22. Two rows of discharge openings 22 are provided along the side edge so as to broadly cool the surface in the vicinity of the side edge of the platform 5.

Additionally, in the same manner, in the cooling communication holes 24b on the convex side 26, a platform passageway 31 is formed in such a manner that the opening of the side end surface is closed by the plug 28, and a discharging passageway 33 is formed so as to be inclined from the platform passageway 31 toward the discharge opening 22.

The platform passageway 30 on the concave side 20 and the platform passageway 31 on the convex side 26 are formed in a linear shape in a direction opposite to each other, respectively. Additionally, since the discharging passageways 32 and 33 are inclined toward the side end portion of the platform 5, it is possible to broadly cool the surface of the platform 5.

According to the first example, one ends of the platform passageways 30 and 31 communicate with the moving blade cooling passageways 17a, 17b, 17c, or 17d and the other ends thereof communicate with the side end surface of the platform 5 so as to be formed in a linear shape by closing the opening of the side end surface. Accordingly, it is possible to form the platform passageways 30 and 31 after or at the same time the platform 5 and the blade part 3 are integrally formed by casting.

Then, it is possible to form the cooling communication holes 24a and 24b in such a manner that the discharging passageways 32 and 33 are formed by machining so as to intersect the platform passageways 30 and 31 in an inclined direction.

Additionally, since the cooling communication passageways 24a and 24b are formed through the inside of the platform 5 and the moving blade cooling passageways 17, it is possible to guide high-pressure cooling air, flowing to the moving blade cooling passageways, to the surface in the vicinity of the side edge of the platform 5 without particularly attaching an additional member such as a cover plate to the platform 5.

As a result, since a portion in the vicinity of the side edge of the platform 5 which is away from the moving blade cooling passageways 17 and is easily influenced by thermal stress caused by the high-temperature combustion gas, that is, the upper surface of the side edge is effectively cooled, it is possible to improve the cooling performance of the platform 5. Also, since the additional member is not attached to the gas turbine moving blade 1 which rotates at a high speed, it is possible to improve reliability of the moving blade. Further, since the welding process of the additional member is not carried out, the processes of assembling do not increase, thereby improving the workability of assembling.

### (Embodiment)

Next, an embodiment will be described with reference to Fig. 2.

The same reference numerals are given to the same components as those of the first example, and the description thereof will be omitted. In the embodiment, cooling passageway swollen parts 36a, 36b, 36c, and 36d are formed in such a manner that the moving blade cooling passageways 17a, 17b, 17c, and 17d of the shank part 7 are swollen toward the side edge of the platform 5.

Since the cooling passageway swollen parts 36a, 36b, 36c, and 36d are formed as shown in Fig. 2(b), the shank part 7 is swollen outward, and cooling communication holes 39, 40, and 41 are formed through the inside of the platform 5 and a swollen shank part 38 in a linear shape.

The platform 5 on the concave side 20 is provided with the outer cooling communication hole 39 and the inner cooling communication hole 40, and the platform 5 on the convex side 26 is provided with the cooling communication hole 41.

Additionally, the cooling communication holes 39, 40, and 41 may be integrally formed upon forming the blade part 3 and the platform 5 by casting or may be formed by machining after casting.

Each of the cooling passageway swollen parts 36a, 36b, 36c, and 36d may have an inner diameter swollen to the blade root part 9 (see Fig. 4) as shown by the chain line of Fig. 2(b).

According to the embodiment, in the swollen shank part 38 and the platform 5, it is possible to form the cooling communication holes 39, 40, and 41 passing through the inside of the platform 5 and the swollen shank part 38 in a linear shape. As a result of the cooling communication holes 39, 40, and 41, it is possible to cool the side edge of the platform 5 positioned away from the moving blade cooling passageways 17 by guiding the high-pressure cooling air, flowing to the moving blade cooling passageways, to the portion in the vicinity of the side edge of the platform 5, that is, the upper surface of the side edge without particularly attaching the additional member such as the cover plate to the platform 5.

Additionally, the cooling communication holes 24a and 24b may be arranged at an appropriate angle therebetween so as to optimize the cooling state of the platform.

Accordingly, like the first example, since the portion in the vicinity of the side edge of the platform 5 which is away from the moving blade cooling passageways 17 and is easily influenced by thermal stress of the high-temperature combustion gas, that is, the upper surface of the side edge is effectively cooled, it is possible to improve the cooling performance of the platform 5. Also, since the additional member is not attached to the gas turbine moving blade 1 which rotates at a high speed, it is possible to improve the reliability of the moving blade. Further, since a welding process of the additional member is not carried out, the processes of assembling do not increase, thereby improving the workability of assembling.

### (Second Example)

A second example will be described with reference to Fig. 3.

The same reference numerals are given to the same components as those of the first example, and the description thereof will be omitted. In the third embodiment, as shown in Fig. 3(b), an projecting part 43 is formed at a portion where the lower surface of the platform 5 intersects the outer surface of the shank part 7, and cooling communication holes 45, 46, and 47 are formed through the inside of the shank part 7, the platform 5, and the projecting part 43 in a linear shape.

Then, as shown in Fig. 3(c), the projecting part 43, in which the cooling communication hole 45 is formed, protrudes in a convex shape. The projecting part 43 and the cooling communication hole 45 are simultaneously formed upon forming the platform 5 and the shank part 7 by casting. The projecting part 43 is formed in a portion having an projection necessary for forming the cooling communication hole 45 so that only the cooling communication hole 45 is formed through the portion.

Additionally, the cooling communication holes 45, 46, and 47 may be formed by machining after forming the blade part 3, the platform 5, and the projecting part 43 by casting.

The cooling communication holes 24a and 24b may be arranged at an appropriate angle therebetween so as to optimize the cooling state of the platform.

According to the second example, it is possible to cool the side end portion of the platform 5 away from the moving blade cooling passageways 17 in such a manner that the projecting part 43 is formed in only a portion where the cooling communication hole 45 is provided by restricting the weight increase caused by the projecting part 43 to be as small as possible to realize a decrease in weight and the high-pressure cooling air flowing to the moving blade cooling passageways 17 is guided to the portion in the vicinity of the side edge of the platform 5.

The first example, the second example, and the embodiment may be put into practice in combination with one another. For example, the platform 5 on the concave side 20 may be provided with the projecting part 43 like the second example, and the platform 5 on the convex side 26 may be provided with the platform passageway 31 of which the opening is closed by the plug 28 like the first example. Likewise, when the structures according to the above-described examples and embodiments are put into practice in combination with one another, an appropriate structure is employed in consideration of the workability and the cooling performance in accordance with the position and shape of the moving blade cooling passageways 17a, 17b, 17c, and 17d and the cooling portion of the platform 5, thereby improving a design flexibility of the structure for cooling the platform 5.

### Industrial Applicability

According to the invention, since the portion in the vicinity of the side edge of the platform which is away from the moving blade cooling passageways and is easily influenced by the thermal stress caused by the high-temperature combustion gas, that is, the upper surface of the side edge is effectively cooled by guiding the high-pressure cooling air, flowing to the moving blade cooling passageways, to the discharge opening formed in the surface of the platform in the vicinity of the side edge of the platform without particularly attaching the additional member such as the cover plate to the platform, it is possible to provide the platform cooling structure for the gas turbine moving blade capable of improving the cooling performance of the platform and of improving the reliability of the moving blade, the platform cooling structure being suitable for the platform of the gas turbine moving blade.

## Claims

1. A platform cooling structure for a gas turbine moving blade comprising:
at least one moving blade cooling passageway (17,17a-d) formed in the inside of a blade part (3) of a gas turbine moving blade so as to circulate cooling air; and
cooling communication holes (24a,24b,39,41) each of which having one end thereof communicating with the moving blade cooling passageway (17,17a-d) and the other end communicating with a discharge opening (22) formed in an upper surface of a platform (5) in the vicinity of a side edge of the platform (5),
wherein the cooling communication holes (24a,24b,39,41) are formed through the inside of the platform (5) and of a shank part (7) located below the platform (5) so as to guide the cooling air flowing in the moving blade cooling passageway (17,17a-d) to the upper surface of the platform (5) in the vicinity of the side edge,
wherein the inner diameter of the moving blade cooling passageway (17,17a-d) of the shank part (7) is swollen outward in a direction toward the side edges of the platform (5) to form a cooling passage swollen part (36a-d), and
wherein the cooling communication holes (24a,24b,39,41) are formed in a linear shape from the cooling passage swollen part (36a-d) through the inside of the platform (5) and the shank part (7) to one discharge opening (22).

2. The platform cooling structure for the gas turbine moving blade according to claim 1,
wherein a plurality of the moving blade cooling passageways (17,17a-d) are formed in the inside of the blade part (3), and
wherein each of the moving blade cooling passageways (17,17a-d) has the cooling passage swollen part (36a-d).

3. The platform cooling structure for the gas turbine moving blade according to claim 1 or 2, wherein a plurality of rows of the discharge openings (22) is formed in the upper surface in the vicinity of the side edge of the platform (5) so as to be disposed along the side edge.

4. The platform cooling structure for the gas turbine moving blade according to claim 1, 2 or 3, wherein cooling passage swollen part (36a-d) is provided to have a swollen inner diameter to a blade root part (9).

5. A gas turbine moving blade (1) comprising a platform cooling structure as defined by any one of claims 1 to 4.

6. The gas turbine moving blade (1) according to claim 5, further comprising
a blade part (3) forming a blade;
a platform (5) connected to a bottom of the blade part (3);
a shank part (7) located below the platform (5); and
a blade root part (9) formed below the shank part (7).

7. A gas turbine comprising a gas turbine moving blade (1) according to claim 5 or 6.

## Patentansprüche

1. Eine Plattform-Kühlstruktur für eine Gasturbinen-Laufschaufel, mit:
zumindest einem Laufschaufel-Kühldurchgang (17,17a-d), der im inneren eines Schaufelteils (3) der Gasturbinen-Laufschaufel so ausgebildet ist, dass Kühlluft zirkuliert wird, und
Kühl-Verbindungslöchern (24a,24b,39,41), von denen jedes ein Ende davon in Verbindung mit dem Laufschaufel-Kühldurchgang (17,17a-d) und das andere Ende davon in Verbindung mit einer Austragöffnung (22), die in einer oberen Oberfläche einer Plattform (5) in der Umgebung eines Seitenrands der Plattform (5) ausgebildet ist, hat,
wobei die Kühl-Verbindungslöcher (24a,24b,39,41) durch die Innenseite der Plattform (5) und eines Schaftteils (7), der sich unter der Plattform (5) befindet, ausgebildet sind, um die Kühlluft, die in dem Laufschaufel-Kühldurchgang (17,17a-d) strömt, zu der oberen Oberfläche der Plattform (5) in der Umgebung des Seitenrands zu leiten,
wobei der Innendurchmesser des Laufschaufel-Kühldurchgangs (17,17a-d) des Schaftteils (7) nach außen in einer Richtung zu den Seitenrändern der Plattform (5) so ausgebaucht ist, dass ein Kühldurchgang-Ausbauchteil (36a-d) gebildet ist, und
wobei die Kühl-Verbindungslöcher (24a,24b,39,41) in einer linearen Form von dem Kühldurchgang-Ausbauchteil (36a-d) durch die Innenseite der Plattform (5) und das Schaftteil (7) zu einer Austragöffnung (22) ausgebildet sind.

2. Die Plattform-Kühlstruktur für die Gasturbinen-Laufschaufel gemäß Anspruch 1,
wobei eine Vielzahl der Laufschaufel-Kühldurchgänge (17,17a-d) in der Innenseite des Schaufelteils (3) ausgebildet sind, und
wobei jeder der Laufschaufel-Kühldurchgänge (17,17a-d) das Kühldurchgang-Ausbauchteil (36a-d) besitzt.

3. Die Plattform-Kühlstruktur für die Gasturbinen-Laufschaufel gemäß Anspruch 1 oder 2, wobei eine Vielzahl von Reihen der Austragöffnungen (22) in der oberen Oberfläche in der Umgebung des Seitenrands der Plattform (5) so ausgebildet ist, das sie entlang dem Seitenrand angeordnet ist.

4. Die Plattform-Kühlstruktur für die Gasturbinen-Laufschaufel gemäß Anspruch 1, 2 oder 3, wobei das Kühldurchgang-Ausbauchteil (36a-d) vorgesehen ist, das es einen Ausbauch-Innendurchmesser zu einem Schaufel-Fußteil (9) besitzt.

5. Eine Gasturbinen-Laufschaufel (1) mit einer Plattform-Kühlstruktur gemäß einem der Ansprüche 1 bis 4.

6. Die Gasturbinen-Laufschaufel (1) gemäß Anspruch 5, ferner mit
einem eine Schaufel bildenden Schaufelteil (3),
einer mit einer Unterseite des Schaufelteils (3) verbundenen Plattform (5),
einem Schaftteil (7), das sich unter der Plattform (5) befindet, und
einem Schaufel-Fußteil (9), das unter dem Schaftteil (7) ausgebildet ist.

7. Eine Gasturbine mit einer Gasturbinen-Laufschaufel (1) gemäß Anspruch 5 oder 6.

## Revendications

1. Structure de refroidissement d'une plate-forme d'une aube mobile de turbine à gaz comprenant;
au moins un passage (17, 17a-d) de refroidissement d'une aube mobile, formé à l'intérieur d'une partie (3) d'une aube mobile de turbine à gaz, pour faire circuler de l'air de refroidissement; et
des trous (24a, 24b, 39, 41) de communication de refroidissement, chacun d'entre eux ayant l'une de ses extrémités communiquant avec le passage (17, 17a-d) de refroidissement de l'aube, et l'autre extrémité communiquant avec une ouverture (22) d'évacuation, formée dans une surface supérieure d'une plate-forme (5) à proximité d'un bord latéral de la plate-forme (5),
dans laquelle les trous (24a, 24b, 39, 41) de communication de refroidissement sont formés dans l'intérieur de la plate-forme (5) et d'une partie (7) d'emplanture placée en dessous de la plate-forme (5) de manière à conduire l'air de refroidissement, passant dans le passage (17, 17a-d) de refroidissement de l'aube mobile, à la surface supérieure de la plate-forme (5), au voisinage du bord latéral,
dans laquelle le diamètre intérieur du passage (17, 17a-d) de refroidissement de l'aube mobile de la partie (7) d'emplanture est renflé vers l'extérieur dans une direction allant vers les bords latéraux de la plate-forme (5) pour former une partie (36a-d) renflée du passage de refroidissement, et
dans laquelle les trous (24a, 24b, 39, 41) de communication de refroidissement sont formés en une forme linéaire allant de la partie (36a-d) renflée du passage de refroidissement à une ouverture (22) d'évacuation en passant par l'intérieur de la plate-forme (5) et de la partie (7) d'emplanture,

2. Structure de refroidissement de plate-forme de l'aube mobile de turbine à gaz suivant la revendication 1,
dans laquelle une pluralité des passages (17, 17a-) de refroidissement d'aube mobile sont formés à l'intérieur de la partie (3) de l'aube et
dans laquelle chacun des passages (17, 17a-d) de refroidissement d'une aube mobile a la partie (36a-d) renflée de passage de refroidissement.

3. Structure de refroidissement de plate-forme de l'aube mobile de turbine à gaz suivant la revendication 1 ou 2, dans laquelle une pluralité de rangées d'ouvertures (22) d'évacuation est formée dans la surface supérieure à proximité du bord latéral de la plate-forme (5) de manière à être disposée le long du bord latéral.

4. Structure de refroidissement de plate-forme de l'aube mobile de turbine à gaz suivant la revendication 1 ou 2 ou 3, dans laquelle la partie (36a-d) renflée du passage de refroidissement est prévue de manière à avoir un diamètre intérieur renflé vers une partie (9) de racine de l'aube.

5. Aube (1) mobile de turbine à gaz comprenant une structure de refroidissement de plate-forme telle que définie à l'une quelconque des revendications 1 à 4.

6. Aube (1) mobile de turbine à gaz suivant la revendication 5, comprenant en outre
une partie (3) d'aube formant une aube,
une plate-forme (5) reliée à un fond de la partie (3) d'aube,
une partie (7) d'emplanture placée en dessous de la plate-forme (5), et
une partie (9) de racine d'aube formée en dessous de la partie (7) d'emplanture.

7. Turbine à gaz comprenant une aube (1) mobile de turbine à gaz suivant la revendication 5 ou 6.
